# EUROPÄISCHE PATENTSCHRIFT

(11) **EP 2 785 775 B1**
(45) Veröffentlichungstag und Bekanntmachung des Hinweises auf die Patenterteilung: **16.09.2015**
(21) Anmeldenummer: 12791188.1
(22) Anmeldetag: 27.11.2012
(51) Int. Cl.: C08G 18/77, C08G 101/00, C08G 18/28, C08G 18/66, C08G 18/48

(54) **WASCHBARE, VISKOELASTISCHE POLYURETHANWEICHSCHAUMSTOFFE**
WASHABLE VISCOELASTIC FLEXIBLE POLYURETHANE FOAMS
MOUSSES SOUPLES DE POLYURÉTHANE VISCOÉLASTIQUES LAVABLES

(30) Priorität: 02.12.2011 EP 11191757
(43) Veröffentlichungstag der Anmeldung: 08.10.2014
(73) Patentinhaber: BASF SE, 67056 Ludwigshafen (DE)
(72) Erfinder: MARTIN, Marc, 49448 Lemförde (DE); LUTTER, Heinz-Dieter, 49459 Lembruch (DE); VARDING, Jens, 49635 Badbergen/Wohld (DE); FRERICKS, Ansgar, 48488 Emsbüren (DE); STADLER, Edmund, 96142 Hollfeld (DE)
(86) Internationale Anmeldenummer: PCT/EP2012/073671
(87) Internationale Veröffentlichungsnummer: WO 2013/079461

(56) Entgegenhaltungen:
- EP-A2- 2 159 240
- DE-A1- 19 924 804
- DE-A1-102005 058 090
- DE-A1-102007 061 883

## Beschreibung

Die vorliegende Erfindung betrifft ein Verfahren zur Herstellung von viskoelastischen Polyurethanweichschaumstoffen mit einer Luftdurchlässigkeit von mindestens 1 dm³/s, bei dem man (a) Polyisocyanat mit (b) polymeren Verbindungen mit gegenüber Isocyanaten reaktiven Gruppen, (c) gegebenenfalls Kettenverlängerungs- und/oder Vernetzungsmittel, (d) gegebenenfalls Verbindungen mit nur einer gegenüber Isocyanaten reaktiven Gruppe mit einer Hydroxylzahl von 100 bis 500 mgKOH/g, (e) Katalysator, (f) Treibmittel sowie gegebenenfalls (g) Zusatzstoffen zu einer Reaktionsmischung vermischt und zum Polyurethanweichschaumstoff umsetzt, wobei die polymeren Verbindungen mit gegenüber Isocyanaten reaktiven Gruppen (b) 10 bis 40 Gew.-% mindestens eines Polyalkylenoxids (b1) mit einer Hydroxylzahl von 90 bis 300 mgKOH/g, ausgehend von einem 3 bis 6-funktionellen Startermolekül und einem Propylenoxydanteil, bezogen auf den Gehalt an Alkylenoxyd, von 80 bis 100 Gew.-%, 5 bis 20 Gew.-% mindestens eines Polyalkylenoxids (b2) mit einer Hydroxylzahl von 10 bis 60 mgKOH/g, ausgehend von einem 2 bis 4-funktionellen Startermolekül und einem Propylenoxydanteil, bezogen auf den Gehalt an Alkylenoxyd, von 80 bis 100 Gew.-%, 10 bis 50 Gew.-% mindestens eines Polyalkylenoxids (b3) mit einer Hydroxylzahl von 10 bis 55 mgKOH/g, ausgehend von einem 2 bis 4-funktionellen Startermolekül und einem Ethylenoxydanteil, bezogen auf den Gehalt an Alkylenoxyd, von 70 bis 100 Gew.-% und 0 bis 20 Gew.-% mindestens eines Polyalkylenoxids (b4) mit einer Hydroxylzahl von 50 bis 200 mgKOH/g, ausgehend von einem 2-funktionellen Startermolekül und einem Ethylenoxydanteil, bezogen auf den Gehalt an Alkylenoxyd, von 80 bis 100 Gew.-%, enthalten und wobei der Anteil der Verbindungen b1) bis b4), bezogen auf das Gesamtgewicht der die polymeren Verbindungen mit gegenüber Isocyanaten reaktiven Gruppen (b), mindestens 80 Gew.-% beträgt. Weiter betrifft die vorliegende Erfindung einen viskoelastischen Polyurethanschaumstoff mit einer Luftdurchlässigkeit von mindestens 1 dm³/s, der durch ein solches Verfahren erhältlich ist, und die Verwendung eines solchen Polyurethanschaumstoffs für Matratzen und Kissen.

Viskoelastische Polyurethan-Weichschaumstoffe erlangen in den letzten Jahren eine immer größere Bedeutung. Ihr Einsatz erfolgt insbesondere zur Herstellung von Polstern, Kopfkissen, Matratzen oder zur Schwingungsdämpfung, dort beispielsweise bei der Teppichhinterschäumung oder Hohlraumausschäumung. Viskoelastische Schäume zeichnen sich nach Kompression durch ein langsames Rückstellverhalten in Ihre ursprüngliche Form aus.

Gegenwärtig werden zwei unterschiedliche Gruppen an viskoelastischen Schäumen beschrieben, die sich in ihrer Zellstruktur und im Mechanismus der Viskoelastizität unterscheiden.

Sogenannte pneumatisch (physikalisch) viskoelastische Schäume (pVE) sind geschlossenzellige PU-Weichschäume mit perforierter Zellmembran, bei denen die Luftdurchlässigkeit sehr gering ist. Wird ein solcher Schaum komprimiert, wird die Luft aus den Zellen herausgedrückt. Wird die Kompression aufgehoben, kann der Schaum nur so schnell wieder in seine Ausgangsform relaxieren, wie es die Luftdurchlässigkeit zulässt. Die Rückstellzeit ist daher unter anderem abhängig vom Grad der Perforation bzw. der Offenzelligkeit des PU-Weichschaumstoffs. Je geschlossenzelliger der PU-Weichschaum, desto langsamer die Erholung.

Beispiele für Polyurethanschaumstoffe mit pneumatischer Viskoelastizität sind bereits häufig in der Literatur und in Patentschriften beschrieben worden. So wird bereits 1989 in DE3942330 ein Verfahren zur Herstellung von flexiblen Polyurethan-Weichschaumstoffen mit viskoelastischen, körperschalldämpfenden Eigenschaften und die hierzu verwendeten Polyoxyalkylenpolyol-Mischungen beschrieben.

Die Einstellung der viskoelastischen Eigenschaften und kann auf unterschiedlichen Wegen erreicht werden. So beschreibt US6391935 den Einsatz von Monoolen, EP 908478 beschreibt den Einsatz zyklischer und heterozyklischer Komponenten und WO 2005/003206 den Einsatz bestimmter Kettenverlängerer.

Allen Patentschriften ist gemein, dass der dominierende Anteil der Polyetherolmischungen aus sehr hydrophilen Bausteinen, insbesondere Polyethylenoxydeinheiten aufgebaut ist. Weiter sind die Zellen des Polyurethanschaumstoffs überwiegend geschlossenzellig mit Perforation, so dass sich der viskoelastische Effekt überwiegend aufgrund der geringen Luftdurchlässigkeit der Zellmembranen einstellt.

Die in den genannten Schriften beschriebenen pneumatisch viskoelastischen Polyurethanschaumstoffe haben den Nachteil, dass die hohe Geschlossenzelligkeit nur einen sehr geringen Luftaustausch zulässt. Ohne diesen Luftaustausch kann weder Wärme z.B. vom menschlichen Körper abgeführt werden , was zu vermehrtem Schwitzen führt, noch feuchte Luft z.B. vom Schweiß des menschlichen Körpers oder vom Waschprozess abtransportiert werden. Weiter führt der hohe Anteil von hydrophilen Polyolen dazu, dass der Schaum sehr hydrophil ist, Wasser leicht aufnimmt und nur schlecht wieder abgibt und daher zum Aufquellen neigt. Ein weiterer Nachteil dieser viskoelastischen Polyurethanschaumstoffe ist deren geringe mechanische Belastbarkeit, die sich insbesondere durch geringe Werte, insbesondere für die Zugfestigkeit, ausdrückt, die sich in nassem Zustand noch verschlechtern.

Weiter führt die hohe Hydrophilie der Schaumstoffe zu einer hohen Wasseraufnahme, beispielsweise durch Schweiß oder beim Versuch, den Schaumstoff zu waschen. Das Wasser kann in perforierte Zellen sowie in die hydrophile Schaummatrix eindringen, wodurch der Schaum stark aufquillt. Diese Schäume lassen sich aufgrund der geringen Luftdurchlässigkeit nicht zerstörungsfrei trocknen.

Beim Versuch diese nassen Schäume zu trocken, platzen oder reißen die Zellmembranen häufig, was zu einem Verlust des viskoelastischen Verhaltens und zur Zerstörung des Schaumstoffgerüsts führt.

Sogenannte struktur-, oder chemisch viskoelastische Polyurethan-Weichschaumstoffe (cVE) zeichnen sich dadurch aus, dass ihre Glasübergangstemperatur in der Nähe der Raumtemperatur liegt. Solche cVE-Schäume können offenzellig und trotzdem viskoelastisch sein.

Die Einstellung der Rückstellzeit erfolgt hier durch die Verwendung einer speziellen Polyetherpolyol-Zusammensetzung neben einer mehr oder weniger frei wählbaren Isocyanatkomponente. Insbesondere für den besonderen Liegekomfort bei Matratzen und Kopfkissen ist ein offenzelliger Schaum von Vorteil, weil dadurch ein Luftaustausch möglich wird und ein verbessertes Mikroklima erreicht wird.

Beispiele für offenzellige Struktur-viskoelastsiche Weichschaumstoffe (cVE) wurden bereits mehrfach in Patentschriften und in der Literatur erwähnt. So beschreibt US7022746 einen offenzelligen viskoelastischen Schaum mit einer Luftdurchlässigkeit nach ASTM3574G-95 von bis zu 3,9 dm³/s bei einem Maximalwert des Verlustmoduls tan delta bei 10-12°C. Weiter beschreibt diese Schrift, die sich auch die Verbesserung der mechanischen Eigenschaften zur Aufgabe gesetzt hat, viskoelastische Polyurethanschaumstoffe mit einer Zugfestigkeit von 37 bis 60 kPa. Verwendet werden in dieser Schrift zwei Hauptpolyole mit einem Gewichtsanteil von jeweils 30-70 Gew-% von denen ein Polyol zu 70-100 Gew.-% aus Ethylenoxyd-Bausteinen besteht, während das zweite Polyol zu 70-100% aus Propylenoxyd-Bausteinen besteht. Dadurch ist dieser Schaum zwar geringfügig hydrophober als die Schaumstoffe, die ausschließlich mit Ethylenoxyd-basierten Polyolen erhalten werden, allerdings ist vor allem das Quellverhalten in Wasser als auch die Zugfestigkeit dieser Schaumstoffe weiter verbesserungswürdig.

DE102997061883 beschreibt ein Blockschaumsystem, das als offenzellig bezeichnet wird, jedoch nach Produktion erst gewalkt werden muss. Als Polyol wird im Wesentlichen ein Polyol, das nahezu zur Hälfte aus PO- und zur anderen Hälfte aus EO-Bausteinen aufgebaut ist, eingesetzt.

Der Schaum, der nach DE 102997061883 entsteht ist geschlossenzellig, erst nach einem mechanischen Walken platzen die Zellmembranen teilweise auf. In der Patentschrift wird kein Messwert für die Luftdurchlässigkeit nach DIN-Norm genannt, jedoch wird beschrieben, dass nach einer internen Messung ein Luftwiderstand von 350mmWassersäule aufgebaut wird, was eine sehr geringe Luftdurchlässigkeit erkennen lässt. Zudem zeigen Schäume nach DE102997061883 eine sehr geringe Zugfestigkeit von 36kPa.

Diese Nachteile sollen durch den Einsatz spezieller Polyole ausgeglichen werden. So beschreibt WO2008002435 den Einsatz von Polyetherolen mit Bis-Phenol-A als Startermolekül, die die Zugfestigkeit erhöhen sollten, jedoch zeigen die erhaltenen Schäume nur Zugfestigkeiten von bis zu 65kPa.

In EP1960452 werden Rezepturen beschrieben, die einen deutlich reduzierten Anteil an hydrophilem Polyol enthalten. Der Fachmann erwartet dabei eine deutlich geringere Wasseraufnahmen und geringeres Quellen der Schäume. Die in der Patentschrift erwähnten Weichschäume zeigen tatsächlich ein reduziertes Quellen im Wasser von nur 4-7%. Es wird gleichfalls beschrieben, dass die im Stand der Technik erwähnten hydrophilen Weichschaumstoffe aufgrund Ihres Quellverhaltens von ca. 40% in feuchten Medien nicht geeignet sind. Die in der Patentschrift aufgeführten Schäume zeigen wiederum nur geringe Zugfestigkeiten von bis zu 63kPa und sind daher trotz der geringen Wasseraufnahme hohen mechanischen Belastungen nicht gewachsen.

DE10352100 befasst sich mit dem Quellverhalten viskoelastischer Schäume in Wasser und beschreibt pneumatische viskoelastische Schäume mit verbesserten Hydrolyse- und Alterungseigenschaften. Außerdem werden Schäume beschrieben, bei denen die viskoleastischen Eigenschaften in einem breiten Temperaturbereich vorliegen. Erreicht wird das durch den Einsatz von 10-60Gew-% Acrylatpolyolen. Das Quellverhalten in Wasser liegt bei 4% und die tan delta Kurve verspricht über einen weiten Temperaturbereich viskoelastisches Verhalten. Zugfestigkeiten werden nicht angegeben. Nachteilig bei der Verwendung von Acrylatpolyolen sind der hohe Preis und vor allem die hohen Emissionen von Acrylaten, die sich unangenehm im Geruch bemerkbar machen. Weiter zeigen auch diese Schäume eine hohe Geschlossenzelligkeit mit den genannten Nachteilen.

In WO2007/144272 werden hydrophobe viskoelastische, offenzellige Blockweichschäume mit TDI als Isocyanatkomponente beschrieben. Es werden Polyolkomponenten mit hohem Anteil an Polymer-Polyetherolen (Graft-Polyether) eingesetzt. Nachteilig ist die geringe Zugfestigkeit, die mit 40-60kPa angegeben wird, sowie die geringe Luftdurchlässigkeit von nur 30-60L/min.

Der Einsatz von chemisch modifizierten oder unmodifizierten Polyetherolen oder Monoolen auf Basis nachwachsender Rohstoffe, ist derzeit häufig Gegenstand in Neuanmeldungen. Im Bereich der viskoelastischen, offenzelligen Schäume finden diese sogenannten Bio-Polyole in EP1981926, WO2009/106240 aber auch WO2009/032894 Anwendung. Nachteilig ist auch hier die geringe Zugfestigkeit die in keinem der angegeben Patentschriften größer ist als 70kPa.

Aufgabe der vorliegenden Erfindung war es einen viskoelastischen Polyurethanschaumstoff zu liefern, der eine hervorragende Luftdurchlässigkeit und eine hohe Zugfestigkeit aufweist, wobei im Wesentlichen übliche Polyole eingesetzt werden. Weiter war es Aufgabe einen Polyurethanschaumstoff zu liefern, der zerstörungsfrei gewaschen, insbesondere in einer kommerziellen Waschmaschine unter Einsatz eines üblichen Waschpulvers bei Temperaturen bis zu 60 °C, und anschließend getrocknet werden kann, wobei die viskoelastischen Eigenschaften durch das Waschen und Trocknen nicht verloren gehen.

Überraschenderweise wird diese Aufgabe durch ein Verfahren zur Herstellung von viskoelastischen Polyurethanweichschaumstoffen mit einer Luftdurchlässigkeit von mindestens 1 dm³/s gelöst, bei dem man (a) Polyisocyanat mit (b) polymeren Verbindungen mit gegenüber Isocyanaten reaktiven Gruppen, (c) gegebenenfalls Kettenverlängerungs- und/oder Vernetzungsmittel, (d) gegebenenfalls Verbindungen mit nur einer gegenüber Isocyanaten reaktiven Gruppe mit einer Hydroxylzahl von 100 bis 500 mgKOH/g, (e) Katalysator, (f) Treibmittel sowie gegebenenfalls (g) Zusatzstoffen zu einer Reaktionsmischung vermischt und zum Polyurethanweichschaumstoff umsetzt, wobei die polymeren Verbindungen mit gegenüber Isocyanaten reaktiven Gruppen (b) 10 bis 40 Gew.-% mindestens eines Polyalkylenoxids (b1) mit einer Hydroxylzahl von 90 bis 300 mgKOH/g, ausgehend von einem 3 bis 6-funktionellen Startermolekül und einem Propylenoxydanteil, bezogen auf den Gehalt an Alkylenoxyd, von 80 bis 100 Gew.-%, 5 bis 20 Gew.-% mindestens eines Polyalkylenoxids (b2) mit einer Hydroxylzahl von 10 bis 60 mgKOH/g, ausgehend von einem 2 bis 4-funktionellen Startermolekül und einem Propylenoxydanteil, bezogen auf den Gehalt an Alkylenoxyd, von 80 bis 100 Gew.-%, 10 bis 50 Gew.-% mindestens eines Polyalkylenoxids (b3) mit einer Hydroxylzahl von 10 bis 55 mgKOH/g, ausgehend von einem 2 bis 4-funktionellen Startermolekül und einem Ethylenoxydanteil, bezogen auf den Gehalt an Alkylenoxyd, von 70 bis 100 Gew.-% und 0 bis 20 Gew.-% mindestens eines Polyalkylenoxids (b4) mit einer Hydroxylzahl von 50 bis 200 mgKOH/g, ausgehend von einem 2-funktionellen Startermolekül und einem Ethylenoxydanteil, bezogen auf den Gehalt an Alkylenoxyd, von 80 bis 100 Gew.-%, enthalten und wobei der Anteil der Verbindungen b1) bis b4), bezogen auf das Gesamtgewicht der die polymeren Verbindungen mit gegenüber Isocyanaten reaktiven Gruppen (b), mindestens 80 Gew.-% beträgt.

Die erfindungsgemäßen offenzelligen, viskoelastischen Polyurethanweichschaumstoffe zeichnen sich durch einen absoluten Maximalwert des Verlustmoduls tan delta im Temperaturbereich von -10 bis 40°C, vorzugsweise 0 bis 35°C, besonders bevorzugt 10 bis 35 und insbesondere 15 bis 30 °C aus. Dabei entspricht der absolute Maximalwert des Verlustmoduls tan delta der Glastemperatur nach ASTM D 4065-99. Weiter weisen die erfindungsgemäßen viskoelastischen Polyurethanschaumstoffe eine Rückprallelastizitat nach DIN EN ISO 8307 von unter 20 % sowie ein hohes Dämpfungsverhalten auf, welches sich durch einen Wert für tan delta bei 20 °C von mindestens 0.2, vorzugsweise mindestens 0,4 und besonders bevorzugt mindestens 0,5 ausdrückt. Dabei wird der tan delta mittels dynamisch-mechanischer Analyse (DMA) bei einer Frequenz von 1 Hz und einem Temperaturbereich von - 80 bis + 200°C bei einer Deformation von 0,3 % in Anlehnung an DIN EN ISO 6721-1, DIN EN ISO 6721-2, DIN EN ISO 6721-7 bestimmt. Das Temperaturprogramm wird in 5°C-Schritten durchgeführt.

Auch zeigen die erfindungsgemäßen viskoelastischen Polyurethanschaumstoffe eine Luftdurchlässigkeit nach DIN EN ISO 8307 von mindestens 1,0 dm³/s, bevorzugt mindestens 1,2 dm³/s, besonders bevorzugt mindestens 1,4 dm³/s und insbesondere mindestens 1,5 dm³/s. Die Dichte von erfindungsgemäßen Polyurethanweichschaumstoffen ist kleiner als 150 g/l, vorzugsweise 20 bis 100 g/l, besonders bevorzugt 30 bis 80 g/l und insbesondere 40 bis 60 g/l.

Als Polyisocyanate a) können prinzipiell alle bekannten Verbindungen mit mindestens zwei Isocyanatgruppen im Molekül alleine oder in Kombination eingesetzt werden. Vorzugsweise werden Diisocyanate eingesetzt. Bevorzugt kommen für das erfindungsgemäße Verfahren Diphenylmethandiisocyanat (MDI), Toluylendiisocyanat (TDI), oder MDI / TDI-Mischungen zum Einsatz.

Als Diphenylmethandiisocyanat kann monomeres Diphenyldiisocyanat, ausgewählt aus der Gruppe, bestehend aus 2,2'-Diphenylmethandiisocyanat, 2,4'- Diphenylmethandiisocyanat oder 4,4'- Diphenylmethandiisocyanat oder Mischungen von zwei oder allen drei Isomeren sowie Mischungen eines oder mehrerer monomerer Diphenylmethandiisocyanaten mit höherkernigen homologen des Diphenylmethandiisocyanats eingesetzt werden. Vorzugsweise ist die Viskosität des Diphenylmethandiisocyanats (a1) bei 20 °C kleiner als 200 mPas, besonders bevorzugt kleiner als 150 mPas und besonders bevorzugt kleiner als 100 mPas. Besonders bevorzugt ist der Anteil von 2,2' Diphenylmethandiisocyanat kleiner als 5 Gew.-%, bezogen auf das Gesamtgewicht der Polyisocyanate (a).

Bei der Verwendung von TDI werden zumeist Gemische aus dem 2,4- und dem 2,6-Isomeren eingesetzt. Dabei sind die handelsüblichen Mischungen mit 80 % 2,4 und 60 % 2,6-TDI und 35 % 2,4 und 35 % 2,6-TDI besonders bevorzugt

An Stelle der reinen Isocyanate oder im Gemisch mit diesen werden häufig sogenannte modifizierte Isocyanate eingesetzt. Derartige modifizierte Isocyanate können beispielsweise durch Einbau von Gruppen in die Polyisocyanate entstehen. Beispiele für derartige Gruppen sind Urethan-, Allophanat-, Carbodiimid-, Uretonimin-, Isocyanurat-, Harnstoff- und Biuretgruppen.

Besonders bevorzugt sind mit Urethangruppen modifizierte Polyisocyanate, die üblicherweise durch Umsetzung der Isocyanate mit einem Unterschuss an Verbindungen mit mindestens zwei gegenüber Isocyanaten reaktiven Wasserstoffatomen hergestellt werden. Daraus entstehende Verbindungen werden häufig als NCO-Prepolymere bezeichnet. Als Verbindungen mit mindestens zwei gegenüber Isocyanaten reaktiven Wasserstoffatomen werden vorzugsweise polymeren Verbindungen mit gegenüber Isocyanaten reaktiven Gruppen (b) und/oder Kettenverlängerungs- und/oder Vernetzungsmittel (c) eingesetzt.

Ebenfalls besonders bevorzugt sind Carbodiimid- oder Uretonimin-haltige Polyisocyanate, die durch gezielte katalysierte Umsetzung von Isocyanaten mit sich selber entstehen. Weiterhin können Mischungen aus TDI und MDI eingesetzt werden.

Polymere Verbindungen mit gegenüber Isocyanat reaktiven Gruppen (b) weisen ein zahlenmittleres Molekulargewicht von mindestens 450 g/mol, besonders bevorzugt 460 bis 12000 g/mol auf und weisen mindestens zwei gegenüber Isocyanat reaktive Wasserstoffatome pro Molekül auf. Als polymere Verbindungen mit gegenüber Isocyanat reaktiven Gruppen (b) kommen bevorzugt Polyesteralkohole, und/oder Polyetheralkohole mit einer Funktionalität von 2 bis 8, insbesondere von 2 bis 6, vorzugsweise von 2 bis 4 und einem mittleren Equivalentmolekulargewicht im Bereich von 400 bis 3000 g/mol, vorzugsweise 1000 bis 2500 g/mol, in Betracht. Insbesondere werden Polyetheralkohole eingesetzt.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Bei Anlagerung von Alkylenoxyden spricht man auch von Polyalkylenoxydpolyolen. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Di- oder Multimetallcyanidverbindungen, sogenannte DMC-Katalysatoren, eingesetzt werden. Zur Herstellung von viskoelastischen Polyurethanweichschaumstoffen werden insbesondere zwei- und/oder dreifunktionelle Polyalkylenoxydpolyole eingesetzt.

Weiter können als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Dabei enthalten die polymere Verbindungen mit gegenüber Isocyanat reaktiven Gruppen (b) 10 bis 40 Gew.-% mindestens eines Polyalkylenoxids (b1) mit einer Hydroxylzahl von 90 bis 300 mgKOH/g, ausgehend von einem 3 bis 6-funktionellen Startermolekül und einem Propylenoxydanteil, bezogen auf den Gehalt an Alkylenoxyd, von 80 bis 100 Gew.-%, 5 bis 20 Gew.-% mindestens eines Polyalkylenoxids (b2) mit einer Hydroxylzahl von 10 bis 60 mgKOH/g, ausgehend von einem 2 bis 4-funktionellen Startermolekül und einem Propylenoxydanteil, bezogen auf den Gehalt an Alkylenoxyd, von 80 bis 100 Gew.-%, 10 bis 50 Gew.-% mindestens eines Polyalkylenoxids (b3) mit einer Hydroxylzahl von 10 bis 55 mgKOH/g, ausgehend von einem 2 bis 4funktionellen Startermolekül und einem Ethylenoxydanteil, bezogen auf den Gehalt an Alkylenoxyd, von 70 bis 100 Gew.-% und 0 bis 20 Gew.-%, vorzugsweise 1 - 20 Gew.% mindestens eines Polyalkylenoxids (b4) mit einer Hydroxylzahl von 50 bis 200 mgKOH/g, vorzugsweise 56 - 200mgKOH/g, ausgehend von einem 2-funktionellen Startermolekül und einem Ethylenoxydanteil, bezogen auf den Gehalt an Alkylenoxyd, von 80 bis 100 Gew.-%, jeweils bezogen auf das Gesamtgewicht der polymere Verbindungen mit gegenüber Isocyanat reaktiven Gruppen (b).

Vorzugsweise werden als polymere Verbindungen mit gegenüber Isocyanat reaktiven Gruppen (b) ausschließlich Polyetherpolyole eingesetzt. Dabei ist es erfindungswesentlich, dass die polymere Verbindungen mit gegenüber Isocyanat reaktiven Gruppen (b) die Polyetherole (b1) bis (b4) zu mindestens 80 Gew.-%, bevorzugt mindestens 85 Gew.-%, besonders bevorzugt mindestens 90 Gew.-% und insbesondere mindestens 95 Gew.-% enthalten, jeweils bezogen auf das Gesamtgewicht der polymere Verbindungen mit gegenüber Isocyanat reaktiven Gruppen (b). In einer ganz bevorzugten Ausführungsform der vorliegenden Erfindung enthalten die polymeren Verbindungen mit gegenüber Isocyanat reaktiven Gruppen (b) neben den Polyetherolen (b1) bis (b4) keine weiteren polymeren Verbindungen mit gegenüber Isocyanat reaktiven Gruppen.

Besonders bevorzugt weisen die Polyetherole in der vorliegenden Erfindung abgesehen vom Starter im Wesentlichen ausschließlich Ethylenoxyd- und Propylenoxydeinheiten auf. Dabei bedeutet "im Wesentlichen", das geringen Mengen anderer Alkylenoxydeinheiten nicht von Nachteil sind. Vorzugsweise ist der Anteil an Alkylenoxydeinheiten, die nicht Ethylenoxyd- oder Propylenoxydeinheiten sind kleiner als 5 Gew.-%, besonders bevorzugt kleiner als 1 Gew.-% und insbesondere 0 Gew.-%, jeweils bezogen auf das Gesamtgewicht der Alkylenoxydeinheiten.

Als Kettenverlängerungsmittel und/oder Vernetzungsmittel (c) werden Substanzen mit einem Molekulargewicht von kleiner 400 g/mol, bevorzugt von 60 bis 350 g/mol eingesetzt, wobei Kettenverlängerer 2 gegenüber Isocyanaten reaktive Wasserstoffatome und Vernetzungsmittel mindestens 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder aromatische Diole, sowie Diole mit aromatischen Strukturen, mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol und/oder Glycerin eingesetzt.

Sofern Kettenverlängerungsmittel, Vernetzungsmittel oder Mischungen davon Anwendung finden, kommen diese zweckmäßigerweise in Mengen von 0,1 bis 20 Gew.-%, vorzugsweise 0,5 bis 10 Gew.-% und insbesondere 0,8 bis 5 Gew.-%, bezogen auf das Gewicht der Komponenten (b) und (c) zum Einsatz.

Neben den polymeren Verbindungen mit gegenüber Isocyanaten reaktiven Gruppen können gegebenenfalls auch eine oder mehrere Verbindungen mit nur einer gegenüber Isocyanaten reaktiven Gruppe (d) eingesetzt werden. Dabei handelt es sich beispielsweise um Monoamine, Monothiole oder Monoalkohole, beispielsweise auf Basis von Polyethern, Polyestern oder Polyether-Polyester. Beispielsweise werden Monoalkohole, besonders bevorzugt Polyethermonoole, die ausgehend von monofunktionellen Startermolekülen, beispielsweise Ethylenglycolmonomethylether, erhalten werden, eingesetzt. Diese können analog zu den oben beschriebenen Polyetherolen durch Polymerisation von Alkylenoxyd auf das Startermolekül erhalten werden. Vorzugsweise weisen die Polyethermonoole einen hohen Anteil an primären OH-Gruppen auf. Besonders bevorzugt wird bei der Herstellung der Polyethermonoole als Alkylenoxyd ausschließlich Ethylenoxyd eingesetzt. Weitere bevorzugte Monoole sind Verbindungen, die eine aromatische Gruppe aufweisen. Dabei beträgt das zahlemittlere Molekulargewicht der Verbindungen mit nur einer gegenüber Isocyanaten reaktiven Gruppe vorzugswesie 50 bis 1000 g/mol, besonders bevorzugt 80 bis 300 g/mol und insbesondere 100 bis 200 g/mol. Wenn Verbindungen mit nur einer gegenüber Isocyanaten reaktiven Gruppe (d) eingesetzt werden, werden diese vorzugsweise mit einem Anteil von 0,1 bis 5 Gew.-%, besonders bevorzugt 0,5 bis 4,5 Gew.-%, bezogen auf das Gesamtgewicht der polymeren Verbindungen mit gegenüber Isocyanaten reaktiven Gruppen (b) und Verbindungen mit nur einer gegenüber Isocyanaten reaktiven Gruppe (d).

Als Katalysatoren (e) zur Herstellung der viskoelastischen Polyurethanschaumstoffe werden bevorzugt Verbindungen verwendet, welche die Reaktion der Hydroxylgruppen enthaltenden Verbindungen der Komponente (b), (c) und gegebenenfalls (d) mit den Polyisocyanaten (a) und/oder die Reaktion der Isocyanate mit Wasser stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-etyhlhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Ferner sind bei der Herstellung von Polyurethanschaumstoffen ein oder mehrere Treibmittel (f) zugegen. Als Treibmittel (f) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane^{®} 365 mfc, oder Gase, wie Kohlendioxid. In einer bevorzugten Ausführungsform wird als Treibmittel eine Mischung dieser Treibmittel, enthaltend Wasser, besonders bevorzugt ausschließlich Wasser, eingesetzt.

Der Gehalt an physikalischen Treibmitteln (f), wenn vorhanden, liegt in einer bevorzugten Ausführungsform im Bereich zwischen 1 und 20 Gew.-%, insbesondere 5 und 20 Gew.-%, die Menge an Wasser vorzugsweise im Bereich zwischen 0,5 und 8 Gew.-%, besonders bevorzugt zwischen 0,8 und 6 Gew.-% und insbesondere zwischen 1 und 5 Gew.-%, jeweils bezogen auf das Gesamtgewicht der Komponenten (a) bis (g).

Als Hilfsmittel und/oder Zusatzstoffe (g) werden beispielsweise oberflächenaktive Substanzen, Schaumstabilisatoren, Zellregler, äußere und innere Trennmittel, Füllstoffe, Pigmente, Farbstoffe, Flammschutzmittel, Antistatika, Hydrolyseschutzmittel sowie fungistatisch und bakteristatisch wirkende Substanzen eingesetzt.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993, Kapitel 5, Polyurethanweichschaumstoffe.

Bei der Herstellung der erfindungsgemäßen viskoelastischen Polyurethanschaumstoffe werden üblicherweise die polymeren Verbindungen mit gegenüber Isocyanaten reaktiven Gruppen (b), die gegebenenfalls eingesetzten Kettenverlängerungs- und/oder Vernetzungsmittel (c), die gegebenenfalls eingesetzten gegebenenfalls Verbindungen mit nur einer gegenüber Isocyanaten reaktiven Gruppe mit einer Hydroxylzahl von 100 bis 500 mgKOH/g (d), die Katalysatoren (e), die Treibmittel (f), sowie die gegebenenfalls mit verwendeten Hilfsmittel und/oder Zusatzstoffe (g) zu einer sogenannten Polyolkomponente vermischt und in dieser Form mit den Polyisocyanaten a) zur Umsetzung gebracht.

Zur Herstellung der erfindungsgemäßen viskoelastischen Polyurethanschaumstoffe werden die Polyisocyanatprepolymere mit den polymeren Verbindungen mit gegenüber Isocyanaten reaktiven Gruppen im Beisein der genannten Treibmittel, Katalysatoren und Hilfs- und/oder Zusatzstoffe (Polyolkomponente) zur Reaktion gebracht. Dabei werden die Mischungsverhältnisse so gewählt, dass das Äquivalenz-Verhältnis von NCO-Gruppen der Polyisocyanate (a) zur Summe der reaktiven Wasserstoffatome der Komponenten (b) und (f) sowie, falls vorhanden, (c) und (d) vorzugsweise 0,65 bis 1,2 zu 1, vorzugsweise 0,7 bis 1,1 zu 1 und insbesondere 0,1 bis 1 zu 1 beträgt. Ein Verhältnis von 1 zu 1 entspricht dabei einem Isocyanatindex von 100.

Die Herstellung der erfindungsgemäßen Polyurethan-Schaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen oder in Wannen zur Erzeugung von Schaumblöcken hergestellt werden.

Besonders vorteilhaft ist es, nach dem sogenannten Zweikomponentenverfahren zu verfahren, bei dem, wie oben ausgeführt, eine Polyolkomponente hergestellt und mit Polyisocyanat a) verschäumt wird. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C.

Dabei ist die Dichte des erfindungsgemäßen viskoelastischen Polyurethanweichschaumstoffs kleiner als 150 g/l, vorzugsweise 20 bis 100 g/l, besonders bevorzugt 30 bis 80 g/l und insbesondere 40 bis 60 g/l.

Erfindungsgemäße Polyurethanweichschäume werden vorzugsweise für dämmende und dämpfende Elemente, insbesondere im Fahrzeugbau, beispielsweise als Teppichrückseitenbeschichtung, für Polster-, Sitz- oder Liegemöbel, für Matratzen oder Kissen, beispielsweise im orthopädischen und/oder medizinischen Bereich, oder für Schuheinlegesohlen eingesetzt. Ein weiteres Einsatzgebiet sind Autosicherheitsteile, Auflageflächen, Armlehnen und ähnliche Teile im Möbelbereich und im Automobilbau. Weiterhin werden viskoelastische Bauteile zur Schalldämmung und -dämpfung eingesetzt. Besonders bevorzugt werden die erfindungsgemäßen Polyurethanweichschaumstoffe für Matratzen und Kissen eingesetzt.

Die erfindungsgemäßen viskoelastischen Polyurethanschaumstoffe zeichnen sich durch hervorragende mechanische Eigenschaften, insbesondere hervorragende Werte für die Zugfestigkeit und die Bruchdehnung aus. Gleichzeitig weisen die erfindungsgemäßen viskoelastischen Polyurethanschaumstoffe hervorragende Luftdurchlässigkeiten von größer 1 dm³/s auf. Die erfindungsgemäßen viskoelastischen Polyurethanschaumstoffe sind waschbar und können in kommerziellen, haushaltsüblichen Waschmaschinen unter Einsatz von üblichen Waschpulvern bei Temperaturen bis 60 °C ohne Zerstörung sowie ohne wesentliche Verschlechterung, insbesondere der viskoelastischen Eigenschaften und der mechanischen Eigenschaften, wie der Zugfestigkeit und der Bruchdehnung, gewaschen und getrocknet werden.

Im Folgenden soll die Erfindung anhand von Beispielen verdeutlicht werden.

### Beispiele 1 und 2

Aus den in der Tabelle 1 angegebenen Polyolen, Katalysatoren und Zusatzstoffen wurde durch Mischung eine Polyolkomponente hergestellt, die angegebenen Mengen sind Gewichtsteile. Die Polyolkomponente wurde mit einem MDI-Isocyanatgemisch (Diphenylmethandiisocyanat-Gemisch) bei dem angegebenen Index in einem Puromaten mit MKA 10-2/16 Mischkopf bei ca. 150bar vermischt und die Mischung in eine verschließbare Metallform mit den Abmessungen 40x40x10 cm gegeben, wo sie zum Weichschaum in der geschlossenen Form aushärtete. Die Metallform hat eine Temperatur von 60°C, die Entformzeit betrug 6 Minuten.
Die mechanischen Eigenschaften der Schaumstoffe sind in den Tabellen angegeben.
- Polyol 1: Polyetheralkohol auf Basis von Trimethylolpropan und Propylenoxid, Hydroxylzahl 160 mg KOH/g
- Polyol 2: Polyetheralkohol auf Basis von Glycerin, Propylenoxid und Ethylenoxid, Hydroxylzahl 170 mg KOH/g und einem Anteil an Propylenoxyd, bezogen auf das Gesamtgewicht an Ethylenoxyd und Propylenoxyd von ca. 95 Gew.-%.
- Polyol 3: Polyetheralkohol auf Basis von Glycerin und Propylenoxid, Hydroxylzahl 42 mg KOH/g
- Polyol 4: Polyetheralkohol auf Basis von Glycerin Ethylenoxid und Propylenoxid, Hydroxylzahl 42 mg KOH/g und einem Anteil an Ethylenoxyd, bezogen auf das Gesamtgewicht an Ethylenoxyd und Propylenoxyd von ca. 74 Gew.-%.
- Polyol 5: Polyetheralkohol auf Basis von Ethylenglykol als Starter und Ethylenoxyd, Hydroxylzahl 188 mg KOH/g
- Monool: Monool, Hydroxylzahl 406 mg KOH/g
- Vernetzer: Glycerin, Hydroxylzahl 1825 mg KOH/g
- Stabilisator 1: Dabco® DC 198 Air Products
- Katalysator 2: Jeffcat® ZF10 - einbaubarer Aminkatalysator der Firma Huntsman
- Katalysator 3: VP9357 - einbaubarer Aminkatalysator der Firma BASF SE
- Katalysator 4: Dabco® NE 1070 - einbaubarer Aminkatalysator der Firma Air Products
- Iso 1: MDI Mischung der BASF SE, NCO-Gehalt 32,8%, enthaltend 2,4'-MDI, 4,4'-MDI und höherkernige Homologe des MDI
- Waschmittel:: Handelsübliches Waschmittel Persil® der Firma Henkel

**Tabelle 1**

| Beispiel | 1 | 2 |
|---|---|---|
| Polyol 1 | 34,3 | |
| Polyol 2 | | 28 |
| Polyol 3 | 15 | 15,3 |
| Polyol 4 | 40 | 31 |
| Polyol 5 | | 20 |
| Monool | 4 | |
| Vernetzer | 1 | |
| Stabilisator 1 | 1,0 | 1,5 |
| Katalysator 2 | 0,2 | 0,2 |
| Katalysator 3 | 2 | 1 |
| Katalysator 4 | 1 | |
| Wasser | 1,5 | 3,0 |
| Iso 1 | 100 | 100 |
| Index | 100 | 80 |

**Tabelle 2**

| Beispiel | 1 | 2 |
|---|---|---|
| Tan delta (max) bei °C | 20 | 25 |
| Tan delta bei 20°C | 0,68 | 0,61 |
| Raumgewicht kg/m³ | 78 | 48 |
| Stauchhärte 40% [kPa] | 3,3 | 1,0 |
| Zugfestigkeit [kPa] | 190 | 136 |
| Bruchdehnung [%] | 173 | 201 |
| DVR (22h/70-C/50%) [%] | 2,3 | 4,6 |
| DVR (22h/70°C/90%) [%] | 3,2 | 7,7 |
| Hysterese [%] | 41 | 57 |
| Rückprallelastizität [%] | 6 | 11 |
| Luftdurchlässigkeit [dm³/s] | 1,7 | 2,0 |

**Tabelle 3**

| Beispiel | 1 | 1b | 1c | 1d |
|---|---|---|---|---|
| Gewaschen bei °C | - | 40, einmal | 60, einmal | |
| Gewaschen bei °C + Persil | - | | | 60, einmal |
| Raumgewicht kg/m³ | 78 | 76 | 78 | 78 |
| Stauchhärte 40% [kPa] | 3,3 | 3,0 | 3,4 | 3,5 |
| Zugfestigkeit [kPa] | 190 | 177 | 171 | 192 |
| Bruchdehnung [%] | 173 | 181 | 186 | 188 |
| DVR (22h/70°C/50%) [%] | 2,3 | 2,2 | 1,9 | 1,9 |
| DVR (22h/70°C/90%) [%] | 3,2 | 3,3 | 7,6 | 8,5 |
| Hysterese [%] | 41 | 42 | 46 | 45 |
| Rückprallelastizität [%] | 6 | 5 | 4 | 6 |
| Luftdurchlässigkeit [dm³/s] | 1,7 | 1,7 | 1,4 | 1,5 |

**Tabelle 4**

| Beispiel | 2 | 2b | 2c | 2d | 2e |
|---|---|---|---|---|---|
| Gewaschen bei °C | - | 40, einmal | 60, einmal | | |
| Gewaschen bei °C + Persil | - | | | 60, einmal | 40, fünfmal |
| Raumgewicht kg/m³ | 48 | 45 | 44 | 44 | 45 |
| Stauchhärte 40% [kPa] | 1,0 | 1,2 | 1,3 | 1,4 | 1,5 |
| Zugfestigkeit [kPa] | 136 | 160 | 170 | 163 | 146 |
| Bruchdehnung [%] | 201 | 187 | 187 | 186 | 174 |
| DVR (22h/70°C/50%) [%] | 4,6 | 4,8 | 4,7 | 4,9 | 5,4 |
| DVR (22h/70°C/90%) [%] | 7,7 | 7,0 | 6,4 | 9,3 | 5,1 |
| Hysterese [%] | 57 | 62 | 63 | 65 | 66 |
| Rückprallelastizität [%] | 11 | 12 | 12 | 12 | 12 |
| Luftdurchlässigkeit [dm³/s] | 2,0 | 2,4 | 2,3 | 2,2 | 2,3 |

Die Bestimmung des Raumgewichts erfolgte nach DIN EN ISO 845, die Bestimmung der Stauchhärte und Hysterese erfolgte nach DIN EN ISO 3386, die Bestimmung der Zugfestigkeit erfolgte nach DIN EN ISO 1798, die Bestimmung der Bruchdehnung erfolgte nach DIN EN ISO 1798, die Bestimmung des Druckverformungsrests (DVR) erfolgte nach DIN EN ISO 1856, die Bestimmung der Rückprallelastizität erfolgte nach DIN EN ISO 8307 und die Bestimmung der Luftdurchlässigkeit erfolgte nach DIN EN ISO 7231.

Bei einem Waschversuch wurde ein Kissen zuvor gewogen und vermessen, und in einem Kissenbezug in eine kommerziell erhältliche Waschmaschine (Bomann 9110) im Vollwaschprogramm mit 40°C oder 60°C gewaschen.

Je nach Versuch wurde Persil® der Firma Henkel dem Waschprogramm zugegeben (1 Messbecher). Das Programm verwendet ein Schleuderprogramm bei 1000 U/min. Das noch restfeuchte Kissen wurde dann gewogen und vermessen un14d danach entweder bei Raumtemperatur oder bei 60°C in einem Umluftofen bis zur Gewichtskonstanz getrocknet und danach geprüft. In Versuch 2e wurde das Kissen insgesamt fünfmal gewaschen und wieder getrocknet. Die Kissen sind nach dem Trocknen optisch einwandfrei, haben eine intakte Hautstruktur und keine Risse oder sichtbare Fehler.

**Tabelle 5: Quellverhalten und Wasseraufnahme am Beispiel von Versuch 2d:**

| | Vor Waschen | Nach Schleudern | Nach Trocknen |
|---|---|---|---|
| Länge | 100% | 108% | 99% |
| Breite | 100% | 109% | 100% |
| Höhe | 100% | 109% | 98% |
| Gewicht | 100% | 165% | 97% |
| Optische Beurteilung | Einwandfrei | Einwandfrei | Einwandfrei |

Die Gewichtszunahme um 65% zeigt, dass der Schaum hydrophil ist. Trotzdem quillt er lediglich um ca. 9% und lässt sich leicht trocknen. Der Schaum hat nach dem Trocknen dieselbe Geometrie und dieselben mechanischen und insbesondere viskoelastischen Eigenschaften.

## Patentansprüche

1. Verfahren zur Herstellung von viskoelastischen Polyurethanweichschaumstoffen mit einer Luftdurchlässigkeit von mindestens 1 dm³/s, bei dem man
a) Polyisocyanat mit
b) polymeren Verbindungen mit gegenüber Isocyanaten reaktiven Gruppen,
c) gegebenenfalls Kettenverlängerungs- und/oder Vernetzungsmittel,
d) gegebenenfalls Verbindungen mit nur einer gegenüber Isocyanaten reaktiven Gruppe mit einer Hydroxylzahl von 100 bis 500 mgKOH/g,
e) Katalysator,
f) Treibmittel sowie gegebenenfalls
g) Zusatzstoffen
zu einer Reaktionsmischung vermischt und zum Polyurethanweichschaumstoff umsetzt, wobei die polymeren Verbindungen mit gegenüber Isocyanaten reaktiven Gruppen (b)
b1) 10 bis 40 Gew.-% mindestens eines Polyalkylenoxids mit einer Hydroxylzahl von 90 bis 300 mg KOH/g, ausgehend von einem 3 bis 6-funktionellen Startermolekül und einem Propylenoxydanteil, bezogen auf den Gehalt an Alkylenoxyd, von 80 bis 100 Gew.-%,
b2) 5 bis 20 Gew.-% mindestens eines Polyalkylenoxids mit einer Hydroxylzahl von 10 bis 60 mgKOH/g, ausgehend von einem 2 bis 4-funktionellen Startermolekül und einem Propylenoxydanteil, bezogen auf den Gehalt an Alkylenoxyd, von 80 bis 100 Gew.-%,
b3) 10 bis 50 Gew.-% mindestens eines Polyalkylenoxids mit einer Hydroxylzahl von 10 bis 55 mgKOH/g, ausgehend von einem 2 bis 4-funktionellen Startermolekül und einem Ethylenoxydanteil, bezogen auf den Gehalt an Alkylenoxyd, von 70 bis 100 Gew.-% und
b4) 0 bis 20 Gew.-% mindestens eines Polyalkylenoxids mit einer Hydroxylzahl von 50 bis 200 mgKOH/g, ausgehend von einem 2-funktionellen Startermolekül und einem Ethylenoxydanteil, bezogen auf den Gehalt an Alkylenoxyd, von 80 bis 100 Gew.-%
enthalten und
wobei der Anteil der Verbindungen b1) bis b4), bezogen auf das Gesamtgewicht der die polymeren Verbindungen mit gegenüber Isocyanaten reaktiven Gruppen (b), mindestens 80 Gew.-% beträgt.

2. Verfahren nach Anspruch 1, **dadurch gekennzeichnet, dass** der Anteil Monool (d) 0,1 bis 5 Gew.-%, bezogen auf das Gesamtgewicht der polymeren Verbindungen mit gegenüber Isocyanaten reaktiven Gruppen (b) und Verbindungen mit nur einer gegenüber Isocyanaten reaktiven Gruppe (d), beträgt.

3. Verfahren nach Anspruch 1 oder 2, **dadurch gekennzeichnet, dass** der Anteil der Verbindungen b1) bis b4), bezogen auf das Gesamtgewicht der die polymeren Verbindungen mit gegenüber Isocyanaten reaktiven Gruppen (b), mindestens 95 Gew.-% beträgt.

4. Verfahren nach einem der Ansprüche 1 bis 3, **dadurch gekennzeichnet, dass** die Zugfestigkeit des viskoelastischen Polyurethanschaumstoffs mindestens 100 kPa beträgt.

5. Verfahren nach einem der Ansprüche 1 bis 4, **dadurch gekennzeichnet, dass** das absolute Maximum des Verlustmoduls im Temperaturbereich von 15 bis 30 °C liegt.

6. Verfahren nach einem der Ansprüche 1 bis 5, **dadurch gekennzeichnet, dass** Polyisocyanat (a) Diphenylmethandiisocyanat enthält.

7. Verfahren nach einem der Ansprüche 1 bis 6, **dadurch gekennzeichnet, dass** Polyisocyanat (a) Toluoldiisocyanat enthält.

8. Verfahren nach einem der Ansprüche 1 bis 7, **dadurch gekennzeichnet, dass** Polyisocyanat (a) Isocyanatprepolymere enthält

9. Verfahren nach einem der Ansprüche 1 bis 8, **dadurch gekennzeichnet, dass** das Treibmittel (c) Wasser enthält.

10. Verfahren nach Anspruch 9, **dadurch gekennzeichnet, dass** der Anteil von Wasser, bezogen auf das Gesamtgewicht der Komponenten (a) bis (f), 1 bis 5 Gew.-% beträgt.

11. Verfahren nach einem der Ansprüche 1 bis 10, **dadurch gekennzeichnet, dass** die Reaktionsmischung in einer Form zu dem Polyurethanschaumstoff ausgehärtet wird.

12. Verfahren nach einem der Ansprüche 1 bis 11, **dadurch gekennzeichnet, dass** die Reaktionsmischung frei verschäumt wird.

13. Verfahren nach einem der Ansprüche 1 bis 11, **dadurch gekennzeichnet, dass** die Reaktionsmischung in einer geschlossenen Form verschäumt wird.

14. Viskoelastischer Polyurethanweichschaumstoff, erhältlich nach einem der Ansprüche 1 bis 13.

15. Verwendung eines viskoelastischen Polyurethanschaumstoffs nach Anspruch 14 im Innern von Fahrzeugen oder für Matratzen und Kissen.

## Claims

1. A process for producing viscoelastic flexible polyurethane foams having an air flow value of at least 1 dm³/s, which comprises
a) polyisocyanate being mixed with
b) polymeric compounds having isocyanatereactive groups,
c) optionally chain-extending and/or crosslinking agents,
d) optionally compounds having one isocyanatereactive group with a hydroxyl number of 100 to 500 mg KOH/g,
e) catalyst,
f) blowing agent, and also optionally
g) addition agents
to form a reaction mixture and convert it into flexible polyurethane foam,
wherein the polymeric compounds having isocyanatereactive groups (b) comprise
bl) 10 to 40 wt% of at least one polyalkylene oxide having a hydroxyl number of 90 to 300 mg KOH/g, based on a 3 to 6-functional starter molecule and a propylene oxide fraction, based on the alkylene oxide content, of 80 to 100 wt%,
b2) 5 to 20 wt% of at least one polyalkylene oxide having a hydroxyl number of 10 to 60 mg KOH/g, based on a 2 to 4-functional starter molecule and a propylene oxide fraction, based on the alkylene oxide content, of 80 to 100 wt%,
b3) 10 to 50 wt% of at least one polyalkylene oxide having a hydroxyl number of 10 to 55 mg KOH/g, based on a 2 to 4-functional starter molecule and an ethylene oxide fraction, based on the alkylene oxide content, of 70 to 100 wt%, and
b4) 0 to 20 wt% of at least one polyalkylene oxide having a hydroxyl number of 50 to 200 mg KOH/g, based on a 2-functional starter molecule and an ethylene oxide fraction, based on the alkylene oxide content, of 80 to 100 wt%,
and
wherein the fraction of compounds b1) to b4), based on the total weight of polymeric compounds having isocyanate-reactive groups (b), is at least 80 wt%.

2. The process according to claim 1 wherein the fraction of monool (d) is from 0.1 to 5 wt%, based on the total weight of polymeric compounds having isocyanate-reactive groups (b) and compounds having one isocyanate-reactive group (d).

3. The process according to claim 1 or 2 wherein the fraction of compounds b1) to b4), based on the total weight of polymeric compounds having isocyanate-reactive groups (b), is at least 95 wt%.

4. The process according to any of claims 1 to 3 wherein the tensile strength of viscoelastic polyurethane foam is at least 100 kPa.

5. The process according to any of claims 1 to 4 wherein the absolute maximum of the loss modulus lies in the temperature range from 15 to 30°C.

6. The process according to any of claims 1 to 5 wherein polyisocyanate (a) comprises diphenylmethane diisocyanate.

7. The process according to any of claims 1 to 6 wherein polyisocyanate (a) comprises toluene diisocyanate.

8. The process according to any of claims 1 to 7 wherein polyisocyanate (a) comprises isocyanate prepolymers.

9. The process according to any of claims 1 to 8 wherein said blowing agent (c) comprises water.

10. The process according to claim 9 wherein the fraction of water, based on the total weight of components (a) to (f), is from 1 to 5 wt%.

11. The process according to any of claims 1 to 10 wherein the step of curing the reaction mixture to the polyurethane foam takes place in a mold.

12. The process according to any of claims 1 to 11 wherein the reaction mixture is foamed free-risen.

13. The process according to any of claims 1 to 11 wherein the reaction mixture is foamed in a closed mold.

14. A viscoelastic flexible polyurethane foam obtainable according to any of claims 1 to 13.

15. The use of a viscoelastic polyurethane foam according to claim 14 in vehicle interiors or for mattresses and cushions.

## Revendications

1. Procédé pour la préparation de mousses souples viscoélastiques de polyuréthane présentant une perméabilité à l'air d'au moins 1 dm³/s, dans lequel on mélange
a) du polyisocyanate avec
b) des composés polymères présentant des groupes réactifs par rapport aux isocyanates,
c) le cas échéant des agents d'allongement de chaîne et/ou des réticulants,
d) le cas échéant des composés ne présentant qu'un groupe réactif par rapport aux isocyanates présentant un indice hydroxyle de 100 à 500 mg de KOH/g,
e) un catalyseur,
f) des agents gonflants ainsi que le cas échéant
g) des additifs
en un mélange réactionnel et on le transforme en mousse souple de polyuréthane, les composés polymères présentant des groupes réactifs par rapport aux isocyanates (b) contenant
b1) 10 à 40% en poids d'au moins un poly(oxyde d'alkylène) présentant un indice hydroxyle de 90 à 300 mg de KOH/g, partant d'une molécule de départ trifonctionnelle à hexafonctionnelle et d'une proportion d'oxyde de propylène, par rapport à la teneur en oxyde d'alkylène, de 80 à 100% en poids,
b2) 5 à 20% en poids d'au moins un poly(oxyde d'alkylène) présentant un indice hydroxyle de 10 à 60 mg de KOH/g, partant d'une molécule de départ difonctionnelle à tétrafonctionnelle et d'une proportion d'oxyde de propylène, par rapport à la teneur en oxyde d'alkylène, de 80 à 100% en poids,
b3) 10 à 50% en poids d'au moins un poly(oxyde d'alkylène) présentant un indice hydroxyle de 10 à 55 mg de KOH/g, partant d'une molécule de départ difonctionnelle à tétrafonctionnelle et d'une proportion d'oxyde d'éthylène, par rapport à la teneur en oxyde d'alkylène, de 70 à 100% en poids,
et
b4) 0 à 20% en poids d'au moins un poly(oxyde d'alkylène) présentant un indice hydroxyle de 50 à 200 mg de KOH/g, partant d'une molécule de départ difonctionnelle et d'une proportion d'oxyde d'éthylène, par rapport à la teneur en oxyde d'alkylène, de 80 à 100% en poids,
et la proportion des composés b1) à b4), par rapport au poids total des composés polymères présentant des groupes réactifs par rapport aux isocyanates (b) étant d'au moins 80% en poids.

2. Procédé selon la revendication 1, **caractérisé en ce que** la proportion de mono-ol (d) est de 0,1 à 5% en poids, par rapport au poids total des composés polymères présentant des groupes réactifs par rapport aux isocyanates (b) et des composés ne présentant qu'un groupe réactif par rapport aux isocyanates (d).

3. Procédé selon la revendication 1 ou 2, **caractérisé en ce que** la proportion des composés b1) à b4), par rapport au poids total des composés polymères présentant des groupes réactifs par rapport aux isocyanates (b), est d'au moins 95% en poids.

4. Procédé selon l'une quelconque des revendications 1 à 3, **caractérisé en ce que** la résistance à la traction de la mousse viscoélastique de polyuréthane est d'au moins 100 kPa.

5. Procédé selon l'une quelconque des revendications 1 à 4, **caractérisé en ce que** le maximum absolu du module de perte se situe dans la plage de température de 15 à 30°C.

6. Procédé selon l'une quelconque des revendications 1 à 5, **caractérisé en ce que** le polyisocyanate (a) contient du diisocyanate de diphénylméthane.

7. Procédé selon l'une quelconque des revendications 1 à 6, **caractérisé en ce que** le polyisocyanate (a) contient du diisocyanate de toluène.

8. Procédé selon l'une quelconque des revendications 1 à 7, **caractérisé en ce que** le polyisocyanate (a) contient des prépolymères d'isocyanate.

9. Procédé selon l'une quelconque des revendications 1 à 8, **caractérisé en ce que** l'agent gonflant (c) contient de l'eau.

10. Procédé selon la revendication 9, **caractérisé en ce que** la proportion d'eau, par rapport au poids total des composants (a) à (f), est de 1 à 5% en poids.

11. Procédé selon l'une quelconque des revendications 1 à 10, **caractérisé en ce que** le mélange réactionnel est durci en mousse de polyuréthane dans un moule.

12. Procédé selon l'une quelconque des revendications 1 à 11, **caractérisé en ce que** le mélange réactionnel est moussé librement.

13. Procédé selon l'une quelconque des revendications 1 à 11, **caractérisé en ce que** le mélange réactionnel est moussé dans un moule fermé.

14. Mousse souple viscoélastique de polyuréthane pouvant être obtenue selon l'une quelconque des revendications 1 à 13.

15. Utilisation d'une mousse viscoélastique de polyuréthane selon la revendication 14 à l'intérieur de véhicules ou pour des matelas et des coussins.
